# EUROPEAN PATENT APPLICATION

(11) **EP 4 786 821 A1**
(43) Date of publication of application: **05.08.2026**
(21) Application number: 24888538.6
(22) Date of filing: 23.10.2024
(51) Int. Cl.: F16H 1/28, F16C 19/10, F16C 19/16, F16C 33/58, F16C 35/077, F16C 43/06

(54) **SUN GEAR UNIT OF PLANETARY GEAR MECHANISM, AND TRANSMISSION**

(30) Priority: 10.11.2023 JP 2023192377; 04.03.2024 JP 2024032061
(71) Applicant: NSK Ltd., Tokyo 141-8560 (JP)
(72) Inventor: FUJINO, Takahiro, Fujisawa-shi, Kanagawa 251-8501 (JP); NOMOTO, Takahisa, Fujisawa-shi, Kanagawa 251-8501 (JP); SUGIMAN, Tomoharu, Fujisawa-shi, Kanagawa 251-8501 (JP)
(74) Representative: Grünecker Patent- und Rechtsanwälte PartG mbB
(86) International application number: PCT/JP2024/037808
(87) International publication number: WO 2025/100240

(57) **Abstract**

A sun gear unit of a planetary gear mechanism includes a sun gear shaft having a first end part that inputs and outputs a rotational force and a second end part on a side opposite to the first end part, a shaft raceway surface being formed on an outer circumferential surface, a sun gear provided at the second end part and meshing with a planetary gear of the planetary gear mechanism, an outer ring attached to a support portion that supports the sun gear shaft, provided to surround the shaft raceway surface, and having an outer ring raceway surface formed on an inner circumferential surface thereof, and a plurality of rolling elements disposed between the shaft raceway surface and the outer ring raceway surface.

## Description

### Technical Field

The present disclosure relates to a sun gear unit of a planetary gear mechanism and a transmission.

### Background Art

For example, as described in Patent Literature 1, there is a transmission (reduction gear) that reduces a rotation speed of a drive shaft of a drive unit and outputs the reduced speed. The transmission includes a plurality of rotating shafts on which gears are provided and reduces a rotation speed by sequentially transmitting rotation of the drive shaft to the plurality of rotating shafts. Also, there is a transmission that uses a planetary gear mechanism to change a rotation speed.

### Citation List

### Patent Literature

Patent Literature 1: Japanese Unexamined Patent Publication No. 2017-3048

### Summary of Invention

### Technical Problem

Here, in a transmission including a planetary gear mechanism, a sun gear shaft of a sun gear unit of the planetary gear mechanism is rotatably supported by a support portion via a bearing. If runout occurs in this sun gear shaft, there is a likelihood that rotational performance, durability, and the like may be reduced.

Therefore, an objective of the present disclosure is to provide a sun gear unit of a planetary gear mechanism and a transmission capable of stably and rotatably supporting a sun gear shaft.

### Solution to Problem

A sun gear unit according to the present disclosure is [1] "a sun gear unit of a planetary gear mechanism, and includes a sun gear shaft having a first end part that inputs and outputs a rotational force and a second end part on a side opposite to the first end part, a shaft raceway surface being formed on an outer circumferential surface between the first end part and the second end part, a sun gear provided at the second end part and meshing with a planetary gear of the planetary gear mechanism, an outer ring attached to a support portion that supports the sun gear shaft, provided to surround the shaft raceway surface, and having an outer ring raceway surface formed on an inner circumferential surface thereof, and a plurality of rolling elements disposed between the shaft raceway surface and the outer ring raceway surface".

In the sun gear unit, the sun gear shaft is supported by the support portion via the rolling elements and the outer ring. That is, the sun gear shaft also functions as an inner ring of a bearing. In this way, the sun gear unit can reduce the number of components of the mechanism that supports the sun gear shaft and can suppress a decrease in support accuracy of the sun gear shaft due to variations in component accuracy or the like. Therefore, in the sun gear unit, the sun gear shaft can be stably and rotatably supported.

The sun gear unit according to the present disclosure may be [2] "the sun gear unit according to the above-described [1], in which a spline is formed on an outer circumferential surface or an inner circumferential surface of the first end part". Thereby, the sun gear unit can more reliably transmit a rotational force to and from another rotating member via the spline.

The sun gear unit according to the present disclosure may be [3] "the sun gear unit according to the above-described [1] or [2], in which the sun gear shaft includes a groove shoulder surface forming portion having, on an outer circumferential surface thereof, a groove shoulder surface adjacent to the shaft raceway surface at a position on the first end part side with respect to the shaft raceway surface, and a fitting portion adjacent to the groove shoulder surface forming portion at a position on the first end part side with respect to the groove shoulder surface forming portion, and a size of the groove shoulder surface forming portion in a radial direction of the sun gear shaft is larger than a size of the fitting portion in the radial direction of the sun gear shaft". In this case, a step is formed on an outer circumferential surface of the sun gear shaft between the groove shoulder surface forming portion and the fitting portion. Thereby, the sun gear unit can position the member fitted onto the fitting portion by bringing the member fitted onto the fitting portion into contact with the step portion.

The sun gear unit according to the present disclosure may be [4] "the sun gear unit according to any one of the above-described [1] to [3], in which the sun gear shaft has a first groove shoulder surface and a second groove shoulder surface adjacent to the shaft raceway surface to sandwich the shaft raceway surface in an axial direction of the sun gear shaft, the first groove shoulder surface and the second groove shoulder surface each have an annular shape extending in a circumferential direction of the sun gear shaft, and an outer diameter of the first groove shoulder surface and an outer diameter of the second groove shoulder surface are different from each other". The rolling elements disposed on the shaft raceway surface are less likely to ride up on the groove shoulder surface on the larger-diameter side than on the groove shoulder surface on the smaller-diameter side among the first groove shoulder surface and the second groove shoulder surface. In this way, the sun gear unit can receive an axial load while suppressing riding up of the rolling elements on the groove shoulder surface by making outer diameters of the first groove shoulder surface and the second groove shoulder surface different from each other.

The sun gear unit according to the present disclosure may be [5] "the sun gear unit according to any one of the above-described [1] to [4], in which an engagement portion that engages with the support portion in an axial direction of the sun gear shaft is provided on an outer circumferential surface of the outer ring". In this case, displacement between the outer ring and the support portion in the axial direction of the sun gear shaft can be suppressed by the engagement portion provided on the outer ring.

The sun gear unit according to the present disclosure may be [6] "the sun gear unit according to any one of the above-described [1] to [5], in which a gap is provided between the sun gear and the outer ring and rolling elements in an axial direction of the sun gear shaft". In this case, in the sun gear unit, a degree of freedom in design can be increased, and ease of assembly of the rolling elements and the outer ring can be improved.

The sun gear unit according to the present disclosure may be [7] "the sun gear unit according to any one of the above-described [1] to [6], in which the sun gear shaft is provided with a shaft through hole extending along an axis of the sun gear shaft and through which a rotating shaft is passed". In this way, since another rotating shaft can be disposed inside the sun gear shaft, a reduction in size of a device having the sun gear unit can be achieved.

The sun gear unit according to the present disclosure may be [8] "the sun gear unit according to the above-described [7], in which a hardened layer is provided on a surface portion of the sun gear shaft, the portion provided with the hardened layer has a higher hardness than a portion of the sun gear shaft other than the hardened layer, and a thickness of the hardened layer is greater than half of a wall thickness at the shaft raceway surface of the sun gear shaft". Here, an inner circumferential surface of the shaft through hole of the sun gear shaft is also a surface of the sun gear shaft. Therefore, in addition to a portion of the surface of the sun gear shaft facing outward in the radial direction, the hardened layer is also provided on a portion of an inner circumferential surface of the shaft through hole of the sun gear shaft. When a thickness of the hardened layer is made greater than half of the wall thickness at the shaft raceway surface, the portion of the shaft raceway surface in the sun gear shaft is in a state in which the hardened layer is provided over the entire radial wall thickness. Thereby, the sun gear unit can further improve an internal hardness at the shaft raceway surface.

A transmission according to the present disclosure is [9] "a transmission including a planetary gear mechanism having the sun gear unit according to the above-described [7] or [8], and a differential gear unit having a differential case to which a rotational force is transmitted from the planetary gear mechanism, and a differential mechanism provided within the differential case, in which a drive shaft connected to the differential mechanism is passed through the shaft through hole as the rotating shaft".

In the transmission, the sun gear shaft is supported by the support portion via the rolling elements and the outer ring. That is, the sun gear shaft also functions as the inner ring of the bearing. In this way, the sun gear unit can reduce the number of components of the mechanism that supports the sun gear shaft and can suppress a decrease in support accuracy of the sun gear shaft due to variations in component accuracy or the like. Therefore, in the transmission having the sun gear unit, the sun gear shaft can be stably and rotatably supported. Also, in the transmission, the drive shaft connected to the differential gear can be disposed inside the sun gear shaft. Thereby, a reduction in size of the transmission can be achieved.

### Advantageous Effects of Invention

According to the present disclosure, the sun gear shaft can be stably and rotatably supported.

### Brief Description of Drawings

FIG. 1 is a cross-sectional view illustrating a main part of a transmission of an embodiment.
FIG. 2 is a perspective view of a sun gear unit of FIG. 1 from a spline side.
FIG. 3 is a perspective view of the sun gear unit of FIG. 1 from a sun gear side.
FIG. 4 is an enlarged cross-sectional view of the sun gear unit of FIG. 1.
FIG. 5 is a view illustrating an example of a process for manufacturing a sun gear shaft according to the embodiment.
FIG. 6 illustrates a cross-sectional view of a sun gear shaft according to a modified example.
FIG. 7 is an enlarged cross-sectional view around a shaft raceway surface for explaining how the shaft raceway surface and the sun gear are formed.
FIG. 8 is an enlarged cross-sectional view around a shaft raceway surface of a sun gear unit according to a first modified example.
FIG. 9 is an enlarged cross-sectional view of a sun gear unit according to a second modified example.
FIG. 10 is a cross-sectional view illustrating a hardened layer provided on a surface of the sun gear unit according to the second modified example.
FIG. 11(a) to FIG. 11(c) are enlarged cross-sectional views of a sun gear unit according to a third modified example.
FIG. 12 is a cross-sectional view illustrating a main part of a transmission having the sun gear shaft according to the modified example.

### Description of Embodiments

Hereinafter, an embodiment of the present disclosure will be described with reference to the drawings. Further, in each drawing, the same elements or elements having the same functions will be denoted by the same reference signs and duplicate descriptions thereof will be omitted. Also, in the following description, a transmission according to the present disclosure will be described using a reduction gear that reduces a rotation speed of a drive unit.

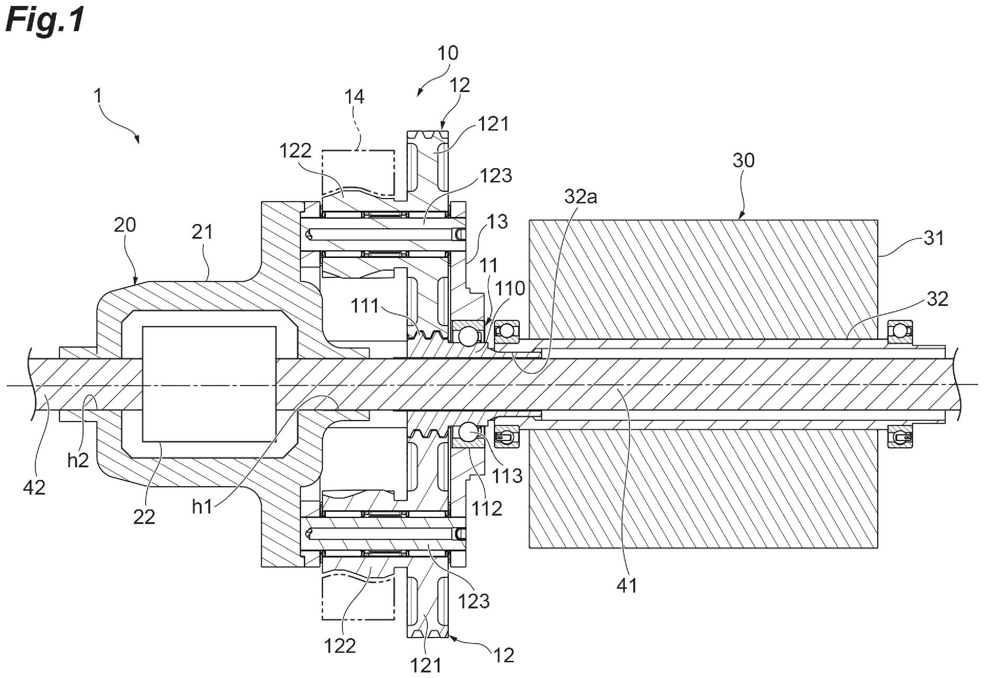

As illustrated in FIG. 1, a transmission 1, as an example in the present embodiment, is configured as a reduction gear for an EV (Electric Vehicle) in which a drive unit 30 having an electric motor is mounted. The transmission 1 includes a planetary gear mechanism 10 and a differential gear unit 20. Also, although not illustrated in FIG. 1, the transmission 1 includes a housing that accommodates each mechanism such as the planetary gear mechanism 10.

The drive unit 30 constitutes an electric motor unit that serves as a drive source for a vehicle. More specifically, the drive unit 30 includes a motor rotor 31 and a rotor shaft 32. The motor rotor 31 constitutes a rotor of an electric motor. Although not illustrated, the drive unit 30 includes, as a drive mechanism, components such as a magnet that constitute an electric motor. Also, the drive unit 30 may also include electronic components such as an inverter.

The rotor shaft 32 is provided at a center portion of the motor rotor 31. The rotor shaft 32 is rotationally driven by the motor rotor 31. The rotor shaft 32 serves as an output shaft for a driving force (rotational force) of the drive unit 30. The rotor shaft 32 is connected to the planetary gear mechanism 10. The rotor shaft 32 has a cylindrical shape. A first drive shaft 41 is passed through the inside of the rotor shaft 32. A rotor spline 32a is formed on an inner circumferential surface of an end part of the rotor shaft 32 on a side connected to the planetary gear mechanism 10.

The planetary gear mechanism 10 of the transmission 1 reduces a rotational force transmitted from the rotor shaft 32 of the drive unit 30 and transmits it to the differential gear unit 20. The planetary gear mechanism 10 includes a sun gear unit 11, a plurality of planetary gear units 12, a carrier 13, and an outer gear 14. The sun gear unit 11 is connected to the rotor shaft 32 of the drive unit 30. The rotational force is transmitted from the rotor shaft 32 to the sun gear unit 11. A rotation axis of the sun gear unit 11 is on the same line as a rotation axis of the rotor shaft 32. The sun gear unit 11 has a sun gear 111. Details of the sun gear unit 11 will be described later.

The plurality of planetary gear units 12 are disposed around the sun gear 111 of the sun gear unit 11 at predetermined intervals from each other in a circumferential direction. Each of the plurality of planetary gear units 12 receives a rotational force from the sun gear 111. Each of planetary gear units 12 includes a first planetary gear (planetary gear) 121, a second planetary gear 122, and a planetary gear shaft 123. The first planetary gear 121 and the second planetary gear 122 are disposed on the same rotation axis and are connected to each other. That is, the first planetary gear 121 and the second planetary gear 122 rotate integrally. The first planetary gear 121 has a larger diameter than the second planetary gear 122. The first planetary gear 121 meshes with the sun gear 111 of the sun gear unit 11. The planetary gear shaft 123 serves as a rotation axis for the first planetary gear 121 and the second planetary gear 122. The planetary gear shaft 123 rotatably supports the first planetary gear 121 and the second planetary gear 122.

The carrier 13 supports end parts of the planetary gear shafts 123 of the plurality of planetary gear units 12 on the drive unit 30 side. A rotation axis of the carrier 13 is on the same line as the rotation axis of the sun gear unit 11. In the planetary gear shafts 123 of the plurality of planetary gear units 12, end parts thereof opposite to the side supported by the carrier 13 are respectively supported by a differential case 21 of the differential gear unit 20.

The outer gear 14 has an annular shape and has a gear on an inner circumferential surface. The outer gear 14 is disposed to surround the plurality of second planetary gears 122 and meshes with each of the plurality of second planetary gears 122. In the present embodiment, the outer gear 14 is fixed to, for example, the housing of the transmission 1 or the like.

Thereby, the plurality of planetary gear units 12 revolve around the sun gear unit 11 as the sun gear unit 11 rotates. As the planetary gear units 12 revolve around the sun gear unit 11, the differential gear unit 20 rotates.

The differential gear unit 20 receives a rotational force from the planetary gear mechanism 10. A rotation axis of the differential gear unit 20 is on the same line as the rotation axis of the planetary gear mechanism 10 and the rotor shaft 32. The differential gear unit 20 includes the differential case 21 and a differential mechanism 22.

The rotational force is transmitted to the differential case 21 from the planetary gear units 12 of the planetary gear mechanism 10. The differential case 21 has a space therein.

The differential mechanism 22 is provided in the differential case 21. The differential mechanism 22 is, for example, a differential mechanism of a vehicle differential gear unit including a pinion gear, a side gear, and the like. Various well-known mechanisms can be used as the differential mechanism 22. The differential case 21 has a first insertion port h1 and a second insertion port h2 provided on the rotation axis of the sun gear unit 11. The first drive shaft (rotating shaft) 41 is inserted in the differential mechanism 22 through the first insertion port h1, and a second drive shaft 42 is inserted therein through the second insertion port h2. Each of the first drive shaft 41 and second drive shaft 42 is provided on the rotation axis of the sun gear unit 11.

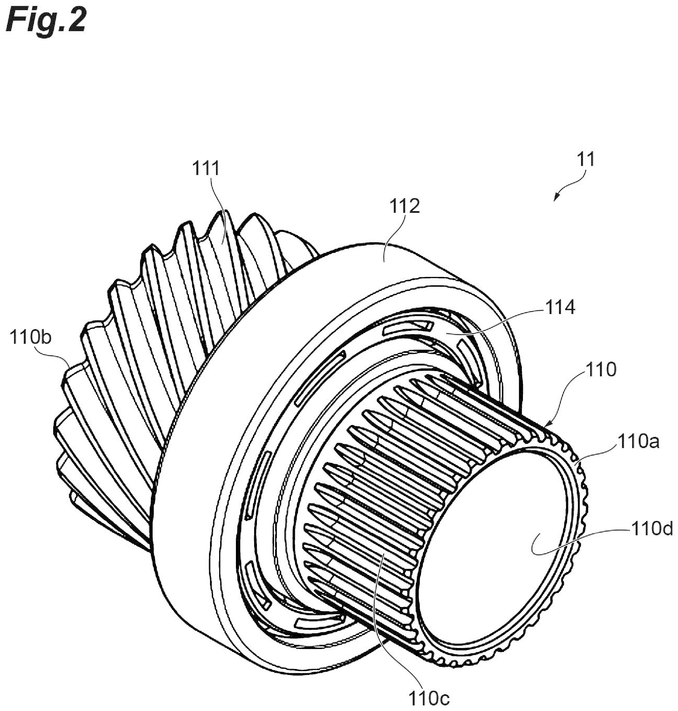

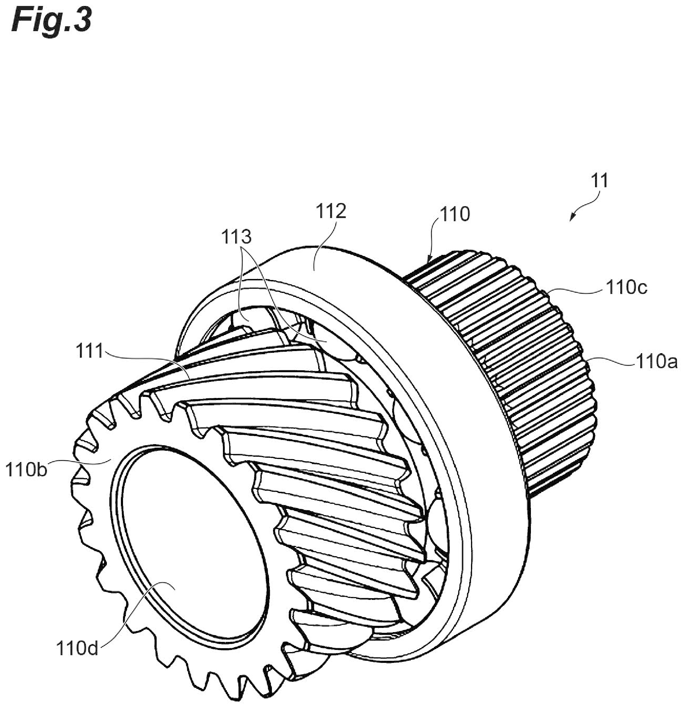

Next, details of the sun gear unit 11 will be described. As illustrated in FIGS. 2 to 4, the sun gear unit 11 includes a sun gear shaft 110, the sun gear 111, an outer ring 112, a plurality of balls (rolling elements) 113, and a retainer 114. The sun gear shaft 110 is disposed on the rotation axis of the rotor shaft 32. The sun gear shaft 110 has a first end part 110a connected to the rotor shaft 32 and a second end part 110b on a side opposite to the first end part 110a. The rotational force is input to the first end part 110a from the rotor shaft 32. In the present embodiment, a sun gear spline (spline) 110c is formed on an outer circumferential surface of the first end part 110a. The sun gear spline 110c meshes with the rotor spline 32a of the rotor shaft 32. Thereby, the rotational force is transmitted from the rotor shaft 32 to the sun gear unit 11.

The sun gear 111 is provided on an outer circumferential surface of the second end part 110b of the sun gear shaft 110. The sun gear 111 rotates integrally with the sun gear shaft 110. In the present embodiment, the sun gear 111 is integrally provided with the sun gear shaft 110. The sun gear 111 transmits the rotational force transmitted to the sun gear unit 11 to the first planetary gear 121 of the planetary gear unit 12.

On an outer circumferential surface of the sun gear shaft 110, a shaft raceway surface 110e is formed between the first end part 110a and the second end part 110b. That is, the shaft raceway surface 110e is formed between the sun gear spline 110c and the sun gear 111 on the outer circumferential surface of the sun gear shaft 110. The shaft raceway surface 110e is provided over the entire outer circumferential surface of the sun gear shaft 110 in the circumferential direction. The shaft raceway surface 110e is a groove extending in a circumferential direction of the sun gear shaft 110. In the present embodiment, a cross-sectional shape of the shaft raceway surface 110e is a substantially arcuate shape.

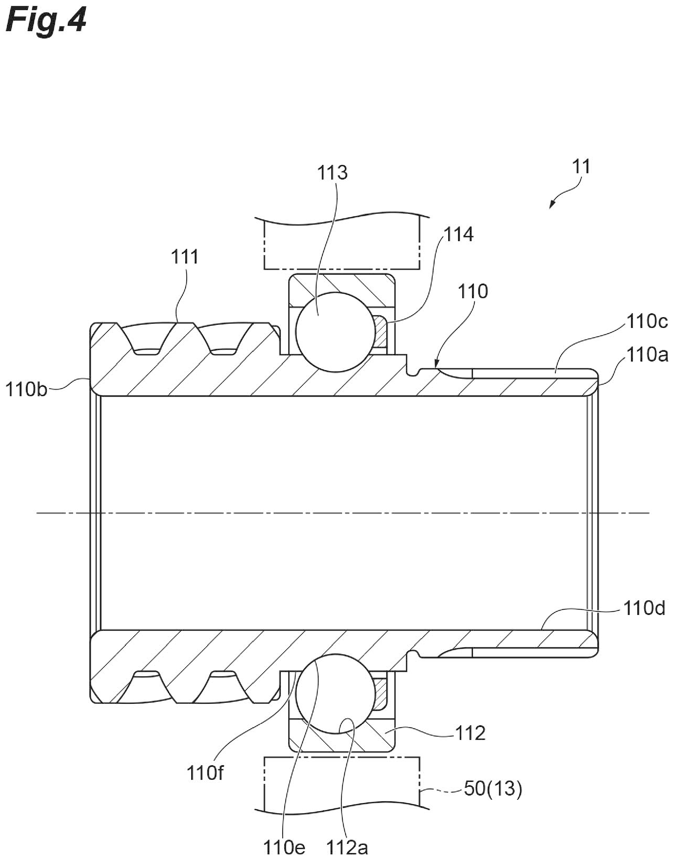

Further, on the outer circumferential surface of the sun gear shaft 110, the shaft raceway surface 110e is formed in a raceway surface forming portion 110f (see FIG. 4) between the sun gear spline 110c and the sun gear 111. The raceway surface forming portion 110f is a portion of the sun gear shaft 110 that faces an inner circumferential surface of the outer ring 112. In the present embodiment, as an example, an outer diameter of the raceway surface forming portion 110f is larger than an outer diameter of the first end part 110a on which the sun gear spline 110c is formed. In the present embodiment, as an example, the outer diameter of the raceway surface forming portion 110f is smaller than an outer diameter of the sun gear 111. However, a size relationship between the raceway surface forming portion 110f and other portions is not limited to the relationship described above, and the size relationship described here may be reversed.

The outer ring 112 is attached to a shaft support portion (support portion) 50 that supports the sun gear shaft 110. In the present embodiment, the shaft support portion 50 is constituted by the carrier (support portion) 13 of the planetary gear mechanism 10. However, the shaft support portion 50 may be constituted by, for example, a part of the housing that accommodates the planetary gear mechanism 10 and the like.

The outer ring 112 is provided to surround the shaft raceway surface 110e formed on the sun gear shaft 110. An outer ring raceway surface 112a is formed on the inner circumferential surface of the outer ring 112. The outer ring raceway surface 112a is provided over the entire inner circumferential surface of the outer ring 112 in the circumferential direction. The outer ring raceway surface 112a is a groove extending in the circumferential direction of the outer ring 112. In the present embodiment, a cross-sectional shape of the outer ring raceway surface 112a is a substantially arcuate shape. The outer ring raceway surface 112a of the outer ring 112 and the shaft raceway surface 110e of the sun gear shaft 110 face each other.

The plurality of balls 113 are disposed between the outer ring raceway surface 112a of the outer ring 112 and the shaft raceway surface 110e of the sun gear shaft 110. The balls 113 each have a spherical shape. The retainer 114 rotatably holds each of the plurality of balls 113 between the outer ring raceway surface 112a and the shaft raceway surface 110e.

A shaft through hole 110d extending along the axis of the sun gear shaft 110 is provided in the sun gear shaft 110. The first drive shaft 41 connected to the differential mechanism 22 of the differential gear unit 20 is passed through the shaft through hole 110d. That is, a rotation axis of the sun gear shaft 110 and a rotation axis of the first drive shaft 41 are on the same line as each other.

As described above, in the sun gear unit 11 of the planetary gear mechanism 10, the sun gear shaft 110 is supported by the shaft support portion 50 via the balls 113 and the outer ring 112. That is, the sun gear shaft 110 also functions as the inner ring of the bearing. In this way, the sun gear unit 11 can reduce the number of components of the mechanism that supports the sun gear shaft 110 and can suppress a decrease in support accuracy of the sun gear shaft 110 due to variations in component accuracy or the like. Therefore, in the sun gear unit 11, the sun gear shaft 110 can be stably and rotatably supported.

Also, an axial load may be applied to the sun gear unit 11. For example, when the sun gear shaft is supported by a bearing having an inner ring, it becomes necessary to attach a retaining ring to the sun gear shaft to prevent displacement of the inner ring, or to attach a spacer to the sun gear shaft to bring the inner ring into abutment with the sun gear or the like. However, in the sun gear unit 11, since the sun gear shaft 110 also functions as an inner ring of the bearing and positioning of the bearing portion is achieved, it is unnecessary to provide a retaining ring, a spacer, or the like for preventing displacement of the inner ring.

In the sun gear unit 11 according to the present embodiment, since the sun gear shaft 110 also functions as an inner ring of a bearing, there is no need to separately provide an inner ring of the bearing. Therefore, in the sun gear unit 11, it is possible to achieve a reduction in size in the radial direction and a reduction in weight.

The sun gear spline 110c that meshes with a rotor spline 32a of the rotor shaft 32 is provided at the first end part 110a of the sun gear shaft 110. Thereby, the sun gear unit 11 can more reliably transmit a rotational force to and from the rotor shaft 32, which is another rotating member, via the sun gear spline 110c.

The shaft through hole 110d is provided inside the sun gear shaft 110. In the sun gear unit 11, another rotation shaft can be disposed inside the sun gear shaft 110. In the present embodiment, the first drive shaft 41 connected to the differential gear unit 20 is disposed in the shaft through hole 110d of the sun gear shaft 110. Thereby, in the sun gear unit 11, a reduction in size of a device (the transmission 1 in the present embodiment) having the sun gear unit 11 can be achieved.

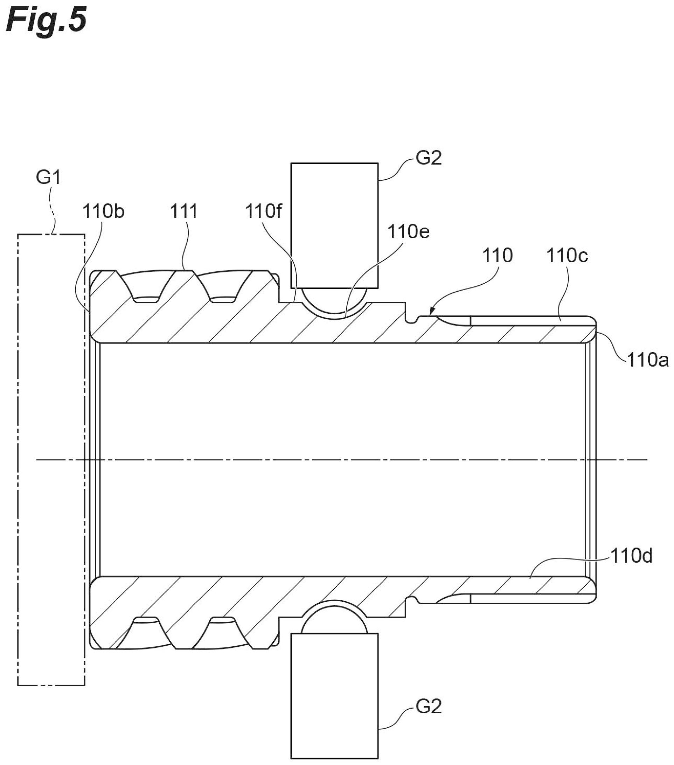

Further, as described above, the sun gear unit 11 does not originally have an inner ring as a separate member, and a retaining ring, a spacer, or the like for preventing displacement of the inner ring is also unnecessary. An axial length of the sun gear shaft 110 can be shortened by an amount of space that becomes unnecessary for providing a retaining ring or the like. Here, generally, a raceway groove (raceway surface) is formed on an outer circumferential surface of the inner ring of the bearing by a grinding shoe in a state in which an end surface of the inner ring in the axial direction is held by a magnetic chuck. For example, when the length of the sun gear shaft 110 is short, the shaft raceway surface 110e can be formed on the outer circumferential surface of the sun gear shaft 110 by a device similar to a device for forming a raceway groove in an inner ring of a bearing. Specifically, for example, the second end part 110b of the sun gear shaft 110 is held by a magnetic chuck G1 as illustrated in FIG. 5. In a state in which the sun gear shaft 110 is held by the magnetic chuck G1, the shaft raceway surface 110e is formed on the raceway surface forming portion 110f of the outer circumferential surface of the sun gear shaft 110 by a grinding shoe G2. In this way, the shaft raceway surface 110e can be formed on the raceway surface forming portion 110f of the sun gear shaft 110 by a device similar to a device for forming an inner ring of a general bearing.

Here, in a case in which a bearing having an inner ring is attached to a sun gear shaft, the inner ring of the bearing may be positioned by being abutted against an end part of the sun gear. In this case, the sun gear and the inner ring become related to each other, resulting in constraints on their installation positions, a size of the sun gear, and the like. On the other hand, in the sun gear unit 11 according to the present embodiment, the sun gear shaft 110 also serves as a function of the inner ring of the bearing. Therefore, in the sun gear unit 11, it is unnecessary to position the inner ring by the sun gear 111. That is, there is no relationship between the sun gear 111 and the shaft raceway surface 110e that functions as the inner ring of the bearing, and there are no constraints on their installation positions, a size of the sun gear 111, and the like.

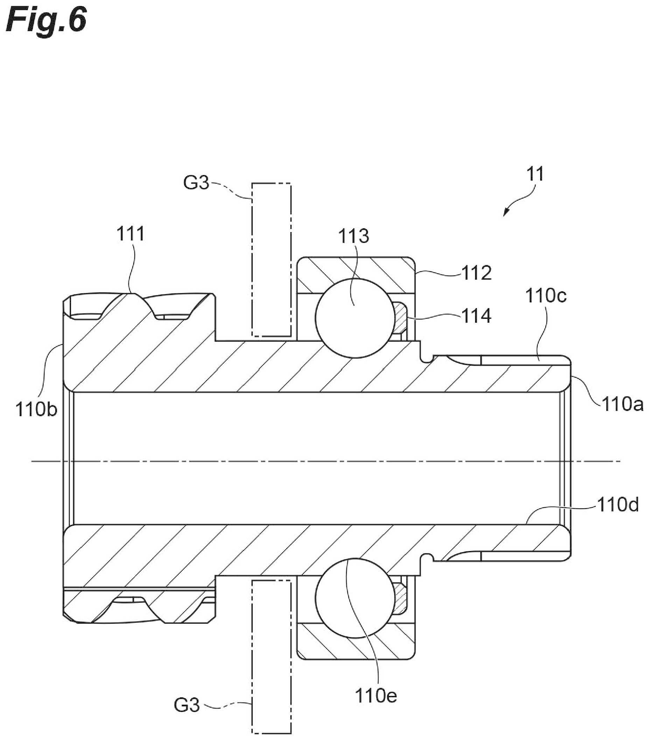

Therefore, as illustrated in FIG. 4, a gap is provided between the sun gear 111 and the outer ring 112 and balls 113 in an axial direction of the sun gear shaft 110. Also, as illustrated in FIG. 6, a large gap of a desired size may be provided between the sun gear 111 and the outer ring 112 and balls 113 in the axial direction of the sun gear shaft 110. As illustrated in FIG. 6, a ball insertion jig G3 used when disposing the balls 113 between the outer ring 112 and the shaft raceway surface 110e may be disposed in the gap between the sun gear 111 and the outer ring 112 and balls 113. In this case, the ball insertion jig G3 is disposed in the gap between the sun gear 111 and the outer ring 112. Then, the balls 113 are disposed between the outer ring 112 and the shaft raceway surface 110e from the first end part 110a side of the sun gear shaft 110. The ball insertion jig G3 functions as a jig for preventing the balls 113 from falling out from between the outer ring 112 and the shaft raceway surface 110e when the balls 113 are being disposed. As described above, there is no relationship between the sun gear 111 and the shaft raceway surface 110e, and therefore the sun gear unit 11 can increase a degree of freedom in design. Also, since the ball insertion jig G3 can be disposed in the gap between the sun gear 111 and the outer ring 112, ease of assembly of the sun gear unit 11 can be improved.

For example, in a configuration in which an inner ring is attached to the sun gear shaft, a width of the sun gear (an axial length of the sun gear shaft) may be increased to position the inner ring by bringing it into abutment with the sun gear. In the sun gear unit 11 according to the present embodiment, as described above, there is no relationship between the position of the sun gear 111 and the position of the shaft raceway surface 110e. For this reason, in the sun gear unit 11, there is no need to increase the width of the sun gear 111 solely for the purpose of bringing the inner ring into abutment therewith. In the sun gear unit 11, the width of the sun gear 111 can be set to only a width necessary for transmitting a rotational force. Accordingly, in the sun gear unit 11, the width of the sun gear 111 is not unnecessarily increased, and thus a reduction in weight can be achieved. Also, in the sun gear unit 11, since the width of the sun gear 111 is not unnecessarily increased, a machining time for forming the sun gear 111 can be reduced, and a life of the tool for forming the sun gear 111 can be prolonged.

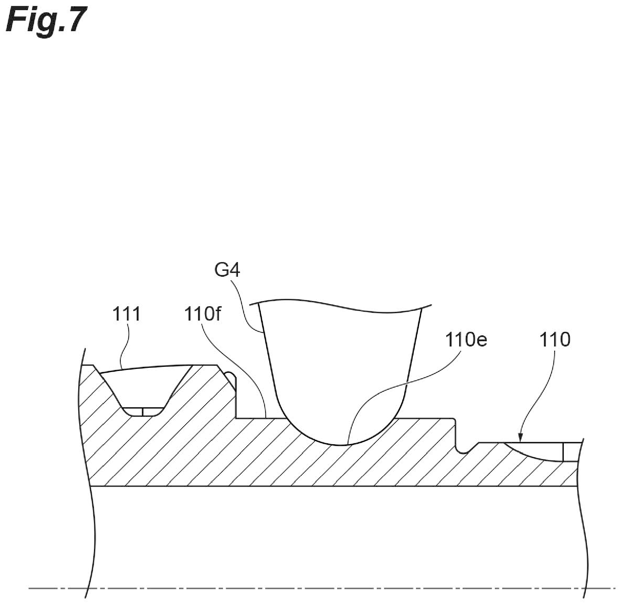

For example, the shaft raceway surface 110e may be polished by a polishing wheel G4 as illustrated in FIG. 7. As described above, there is no relationship between the position of the sun gear 111 and the position of the shaft raceway surface 110e. Therefore, installation positions of the sun gear 111 and the shaft raceway surface 110e can be adjusted so that a tool for forming the shaft raceway surface 110e such as the polishing wheel G4 does not interfere with the sun gear 111. Similarly, a tooth surface of the sun gear 111 may be ground by a gear grinding wheel. In this case as well, the installation positions of the sun gear 111 and the shaft raceway surface 110e can be adjusted so that a tool for forming the sun gear 111 such as a gear grinding wheel does not interfere with a groove shoulder of the shaft raceway surface 110e. In this way, the sun gear unit 11 can increase the degree of freedom in design of the sun gear 111 and the shaft raceway surface 110e, and can easily form the sun gear shaft 110 including the sun gear 111 and the shaft raceway surface 110e.

In the present embodiment, the sun gear 111 is integrally provided with the sun gear shaft 110. Also, the shaft raceway surface 110e is formed on the outer circumferential surface (the raceway surface forming portion 110f) of the sun gear shaft 110. That is, the sun gear shaft 110, the sun gear 111, and the shaft raceway surface 110e are integrally provided. Therefore, when forming the sun gear 111 and the shaft raceway surface 110e, both the sun gear 111 and the shaft raceway surface 110e can be formed using the same machining reference. Thereby, in the sun gear unit 11, coaxiality between the sun gear 111 and the shaft raceway surface 110e can be ensured with higher accuracy.

The transmission 1 includes the planetary gear mechanism 10 having the sun gear unit 11 described above, and the differential gear unit 20 to which a rotational force is transmitted from the planetary gear mechanism 10. In this way, the transmission 1 including the sun gear unit 11 can stably and rotatably support the sun gear shaft 110.

### (First modified example)

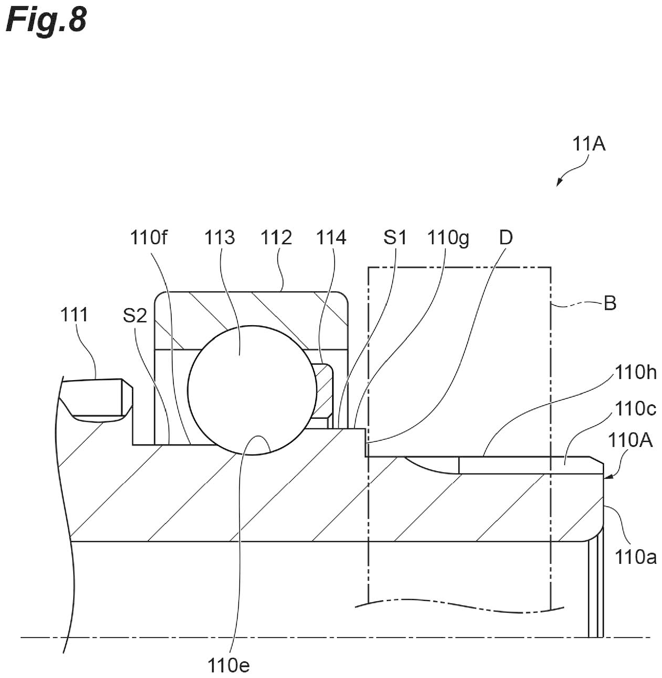

A first modified example of the sun gear unit will be described. As illustrated in FIG. 8, a sun gear unit 11A according to the present modified example includes a sun gear shaft 110A instead of the sun gear shaft 110 of the embodiment. The sun gear shaft 110A has a first groove shoulder surface (groove shoulder surface) S1 and a second groove shoulder surface S2 adjacent to the shaft raceway surface 110e to sandwich the shaft raceway surface 110e in an axial direction of the sun gear shaft 110A. The first groove shoulder surface S1 is adjacent to the shaft raceway surface 110e on the first end part 110a side with respect to the shaft raceway surface 110e. The second groove shoulder surface S2 is adjacent to the shaft raceway surface 110e on the sun gear 111 side (on the second end part 110b side opposite to the first end part 110a) with respect to the shaft raceway surface 110e.

The first groove shoulder surface S1 and the second groove shoulder surface S2 are surfaces facing radially outward of the sun gear shaft 110A and extend annularly in a circumferential direction of the sun gear shaft 110A. In the present modified example, the first groove shoulder surface S1 and the second groove shoulder surface S2 are cylindrical surfaces having a rotation axis of the sun gear shaft 110A as an axis. An outer diameter of the first groove shoulder surface S1 (a diameter of the cylindrical surface) and an outer diameter of the second groove shoulder surface S2 (a diameter of the cylindrical surface) are different from each other. In the present modified example, the outer diameter of the first groove shoulder surface S1 is larger than the outer diameter of the second groove shoulder surface S2.

Also, the sun gear shaft 110A has a first groove shoulder surface forming portion (groove shoulder surface forming portion) 110g and a fitting portion 110h. The first groove shoulder surface forming portion 110g is a portion of the sun gear shaft 110A on the first end part 110a side with respect to the shaft raceway surface 110e. The first groove shoulder surface forming portion 110g has, on an outer circumferential surface thereof, the first groove shoulder surface S1 adjacent to the shaft raceway surface 110e at a position on the first end part 110a side with respect to the shaft raceway surface 110e. The fitting portion 110h is adjacent to the first groove shoulder surface forming portion 110g at a position on the first end part 110a side with respect to the first groove shoulder surface forming portion 110g. The sun gear spline 110c is formed on a portion of the outer circumferential surface of the first groove shoulder surface forming portion 110g on the first end part 110a side. Another member B is fitted onto an outer circumferential surface of the fitting portion 110h. The member B to be fitted onto the fitting portion 110h is not particularly limited.

In the radial direction of the sun gear shaft 110A, a size of the first groove shoulder surface forming portion 110g is larger than a size of the fitting portion 110h. That is, a step D is formed at a connection between the first groove shoulder surface forming portion 110g and the fitting portion 110h.

As described above, in the present modified example, the first groove shoulder surface S1 has a larger diameter than the second groove shoulder surface S2. Therefore, the balls 113 disposed between the outer ring 112 and the shaft raceway surface 110e are less likely to ride up on the first groove shoulder surface S1 on the larger-diameter side than on the second groove shoulder surface S2 on the smaller-diameter side. In this way, the sun gear unit 11A can receive an axial load while suppressing riding up of the balls 113 on the groove shoulder surface on the larger-diameter side by making the outer diameters of the first groove shoulder surface S1 and the second groove shoulder surface S2 different from each other. Further, in the present modified example, the first groove shoulder surface S1 is larger in diameter than the second groove shoulder surface S2, but the second groove shoulder surface S2 may be larger in diameter than the first groove shoulder surface S1. Outer diameters of the first groove shoulder surface S1 and the second groove shoulder surface S2 may be set according to a direction of the axial load to be received.

Also, the step D is formed on the outer circumferential surface of the sun gear shaft 110A (at a connection portion) between the first groove shoulder surface forming portion 110g and the fitting portion 110h. Thereby, the sun gear unit 11A can position the member B fitted onto the fitting portion 110h by bringing the member B fitted onto the fitting portion 110h into contact with the step D.

### (Second modified example)

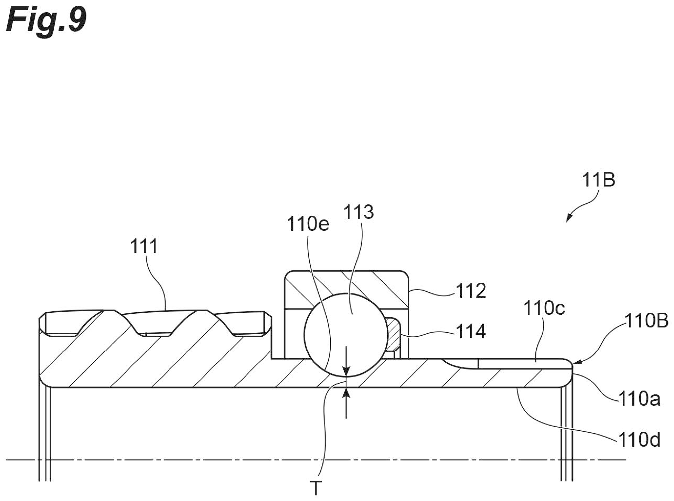

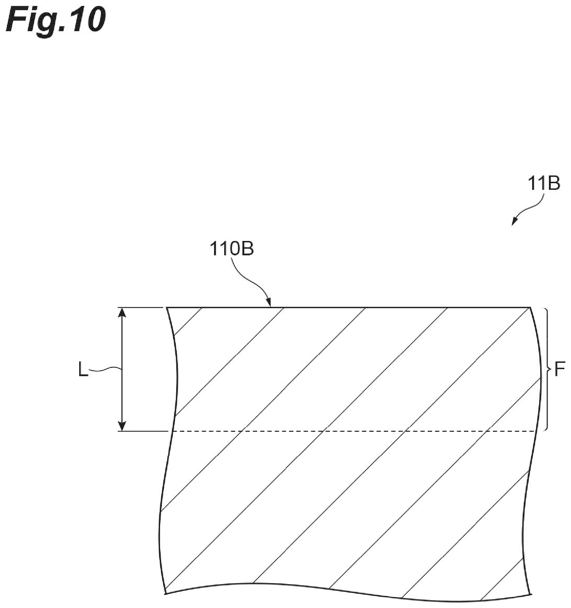

A second modified example of the sun gear unit will be described. As illustrated in FIG. 9, a sun gear unit 11B according to the present modified example includes a sun gear shaft 110B instead of the sun gear shaft 110 of the embodiment. As illustrated in FIG. 10, a hardened layer F is provided on a surface portion of the sun gear shaft 110B. A portion provided with the hardened layer F has a higher hardness than a portion of the sun gear shaft 110B other than the hardened layer F. For example, the hardened layer F may be provided on a surface of the sun gear shaft 110B by carburizing. However, a method for providing the hardened layer F is not limited to the carburizing.

The hardened layer F is provided from the surface of the sun gear shaft 110B to a position of a predetermined depth. Further, an inner circumferential surface of the shaft through hole 110d of the sun gear shaft 110B is also a surface of the sun gear shaft 110B. Therefore, in addition to a portion of the surface of the sun gear shaft 110B facing outward in the radial direction, the hardened layer F is also provided on a portion of an inner circumferential surface of the shaft through hole 110d of the sun gear shaft 110B.

A thickness L of the hardened layer F is greater than half of a wall thickness at the shaft raceway surface 110e of the sun gear shaft 110B. In the present modified example, the shaft raceway surface 110e is formed in a groove shape. In the present modified example, the thickness L of the hardened layer F is greater than half of a wall thickness at a groove bottom portion of the groove-shaped shaft raceway surface 110e. The wall thickness at the groove bottom portion of the shaft raceway surface 110e is a wall thickness T at a smallest-diameter portion of the shaft raceway surface 110e as illustrated in FIG. 9. The wall thickness T is a length from the smallest-diameter portion of the shaft raceway surface 110e to the shaft through hole 110d. Further, the thickness L of the hardened layer F may be a target value (design value) of the thickness of the hardened layer F when performing a process of providing the hardened layer F on the sun gear shaft 110B.

In this case, the groove bottom portion of the shaft raceway surface 110e in the sun gear shaft 110B is in a state in which the hardened layer F is provided over the entire radial wall thickness T. Thereby, the sun gear shaft 110B can further improve an internal hardness at the shaft raceway surface 110e. Also, the hardened layer F may also be provided on the sun gear 111. As a result, the internal hardness of the shaft raceway surface 110e can be improved while ensuring toughness of the sun gear 111.

### (Third modified example)

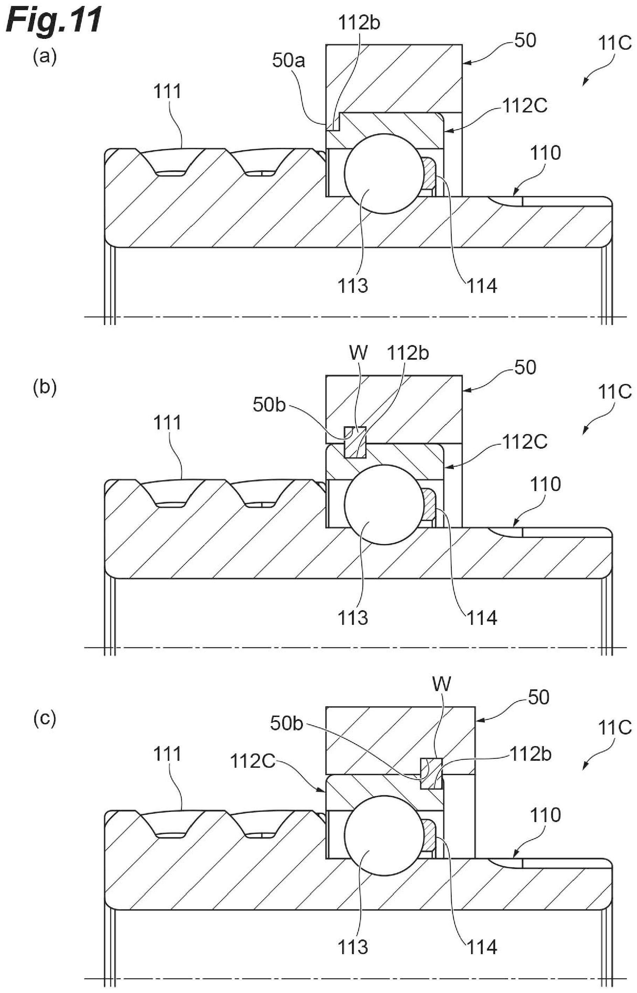

A third modified example of the sun gear unit will be described. As illustrated in FIG. 11(a), a sun gear unit 11C for the present modified example has an outer ring 112C instead of the outer ring 112 of the embodiment. A recessed portion (engagement portion) 112b is provided on an outer circumferential surface of the outer ring 112C. The recessed portion 112b may be provided over the entire circumferential region of the outer ring 112C, or may be provided only in a portion in the circumferential direction. In this example, the recessed portion 112b is provided on an outer circumferential surface of the outer ring 112C at an end part on the sun gear 111 side in an axial direction of the outer ring 112C.

The shaft support portion 50, by which the outer ring 112C is supported, has a protruding portion 50a provided to protrude toward the outer ring 112C side. The protruding portion 50a of the shaft support portion 50 is fitted into the recessed portion 112b of the outer ring 112C. The recessed portion 112b of the outer ring 112C engages with the shaft support portion 50 in the axial direction of the sun gear shaft 110. In this case, the recessed portion 112b provided in the outer ring 112C can suppress displacement between the outer ring 112C and the shaft support portion 50 in the axial direction of the sun gear shaft 110.

Further, as illustrated in FIG. 11(b), the recessed portion 112b of the outer ring 112C may engage with the shaft support portion 50 via an engagement member W such as a retaining ring. Specifically, a recessed portion 50b is provided on an inner circumferential surface of the shaft support portion 50 (a mounting surface of the outer ring 112C). The engagement member W fits into and engages with the recessed portion 112b of the outer ring 112C and the recessed portion 50b of the shaft support portion 50, respectively. As illustrated in FIG. 11(b), the recessed portion 112b of the outer ring 112C into which the engagement member W is fitted may be provided on the outer circumferential surface of the outer ring 112C at a portion other than both end parts in the axial direction. As illustrated in FIG. 11(c), the recessed portion 112b of the outer ring 112C into which the engagement member W is fitted may be provided on the outer circumferential surface of the outer ring 112C at an end part in the axial direction.

The recessed portion 112b is provided on the outer circumferential surface of the outer ring 112C as an engagement portion that engages with the shaft support portion 50. Without being limited to this, a protruding portion may be provided on the outer circumferential surface of the outer ring 112C as an engagement portion that engages with the shaft support portion 50. A shape of the engagement portion (for example, the recessed portion 112b and the protruding portion) provided on the outer ring 112C is not limited as long as it can engage with the shaft support portion 50. Also, the engagement portion provided on the outer ring 112C may engage directly with the shaft support portion 50 as illustrated in FIG. 11(a) or may engage with the shaft support portion 50 via the engagement member W or the like as illustrated in FIG. 11(b).

As described above, the embodiment and modified examples of the present disclosure have been described, but the present disclosure is not limited to the above-described embodiment and modified examples. For example, the sun gear spline 110c formed on the first end part 110a of the sun gear shaft 110 or the like is not limited to being formed on an outer circumferential surface of the sun gear shaft 110 or the like. The sun gear spline formed at the first end part 110a may be formed on an inner circumferential surface of the sun gear shaft 110 or the like. In this case, it is sufficient that a rotor spline is formed on an outer circumferential surface of the rotor shaft 32.

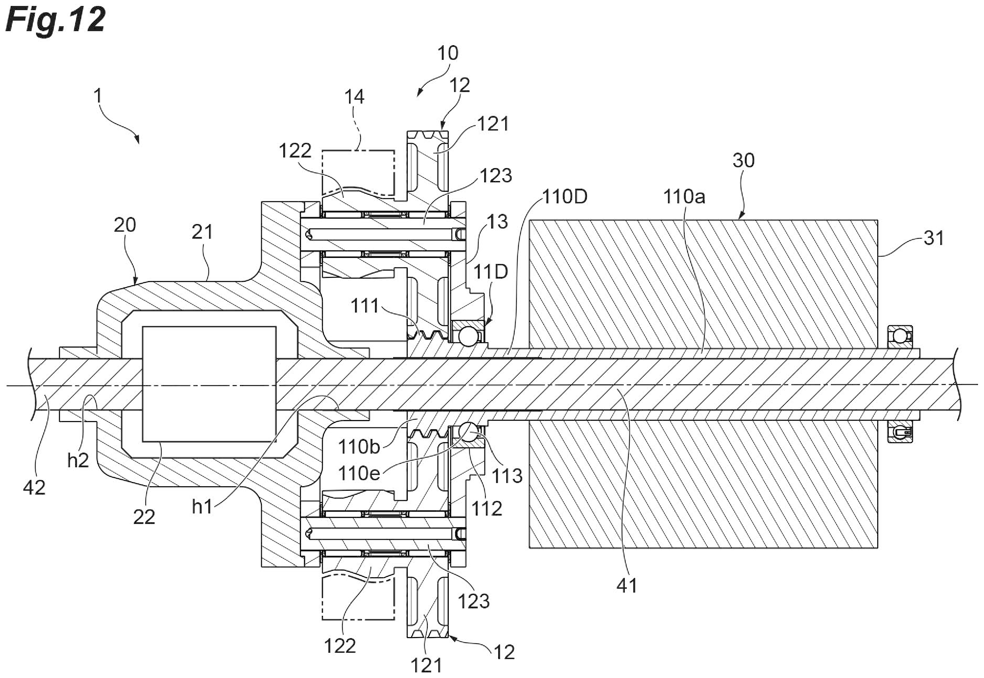

Also, the sun gear shaft 110 or the like is not limited to a configuration in which the sun gear spline 110c is provided at the first end part 110a. The rotational force of the drive unit 30 may be transmitted directly to the first end part of the sun gear shaft. Specifically, as illustrated in FIG. 12, a sun gear unit 11D has a sun gear shaft 110D instead of the sun gear shaft 110 of the embodiment. In the sun gear unit 11D, a configuration other than the sun gear shaft 110D is the same as that of the sun gear unit 11 described above.

At one end part of the sun gear shaft 110D, the first end part 110a to which a rotational force is input from the drive unit 30 is provided. The first end part 110a extends to the inside of the motor rotor 31. The motor rotor 31 of the drive unit 30 is attached to the first end part 110a. The sun gear shaft 110D rotates integrally with the motor rotor 31. That is, the sun gear shaft 110D also serves functions of the sun gear shaft 110 and the rotor shaft 32 of the embodiment described above. As a result, the rotational force of the drive unit 30 is directly input to the first end part 110a of the sun gear shaft 110D.

Similarly to the sun gear shaft 110 of the embodiment, the sun gear shaft 110D has the shaft raceway surface 110e provided between the first end part 110a and the second end part 110b. The sun gear shaft 110D is rotatably supported by the shaft support portion 50 via the balls 113 and the retainer 114. The sun gear 111 is provided at the second end part 110b. Even in this case, the sun gear unit 11D having the sun gear shaft 110D can achieve the same effects as the sun gear unit 11 of the embodiment.

Also, the sun gear shaft 110 and the like are not limited to being rotatably supported by the balls 113. The sun gear shaft 110 and the like may be rotatably supported by "rollers" as rolling elements other than the balls 113. In this case, the shaft raceway surface 110e formed on the outer circumferential surface of the sun gear shaft 110 or the like and the outer ring raceway surface 112a formed on the inner circumferential surface of the outer ring 112 may be formed in a shape corresponding to the rollers serving as the rolling elements.

A configuration of the planetary gear mechanism 10 is not limited to the above-described configuration. At a minimum, it is sufficient if the planetary gear mechanism 10 includes the above-described sun gear unit 11 or the like, and planetary gear units rotating around the sun gear unit 11 or the like. In the above-described embodiment and modified examples, the planetary gear mechanism 10 has been described as a case in which a rotational force is transmitted from the drive unit 30 to the sun gear unit 11 and the like. That is, the rotational force is transmitted to the first end part 110a of the sun gear shaft 110 or the like of the sun gear unit 11 or the like. Without being limited to this, the rotational force may be transmitted from the first end part 110a of the sun gear shaft 110 or the like to other mechanisms. That is, the rotational force may be output from the first end part 110a of the sun gear shaft 110 or the like of the sun gear unit 11 or the like. The planetary gear mechanism 10 is not limited to reducing a rotation speed. The planetary gear mechanism 10 may increase a rotation speed. In this case, the transmission 1 functions as a speed increaser.

At least some of the embodiment and various modified examples described above may be arbitrarily combined.

### Reference Signs List

1 Transmission, 10 Planetary gear mechanism, 11, 11A to 11D Sun gear unit, 13 Carrier (support portion), 20 Differential gear unit, 21 Differential case, 22 Differential mechanism, 41 First drive shaft (rotating shaft), 50 Shaft support portion (support portion), 110, 110A, 110B, 110D Sun gear shaft, 110a First end part, 110b Second end part, 110c Sun gear spline, 110d Shaft through hole, 110e Shaft raceway surface, 110g First groove shoulder surface forming portion (groove shoulder surface forming portion), 110h Fitting portion, 111 Sun gear, 112, 112C Outer ring, 112a Outer ring raceway surface, 112b Recessed portion (engagement portion), 113 Ball (rolling element), 121 First planetary gear (planetary gear), F Hardened layer, S1 First groove shoulder surface (groove shoulder surface), S2 Second groove shoulder surface

## Claims

1. A sun gear unit, which is a sun gear unit of a planetary gear mechanism, comprising:
a sun gear shaft having a first end part that inputs and outputs a rotational force and a second end part on a side opposite to the first end part, a shaft raceway surface being formed on an outer circumferential surface between the first end part and the second end part;
a sun gear provided at the second end part and meshing with a planetary gear of the planetary gear mechanism;
an outer ring attached to a support portion that supports the sun gear shaft, provided to surround the shaft raceway surface, and having an outer ring raceway surface formed on an inner circumferential surface thereof; and
a plurality of rolling elements disposed between the shaft raceway surface and the outer ring raceway surface.

2. The sun gear unit according to claim 1, wherein a spline is formed on an outer circumferential surface or an inner circumferential surface of the first end part.

3. The sun gear unit according to claim 1, wherein the sun gear shaft includes:
a groove shoulder surface forming portion having, on an outer circumferential surface thereof, a groove shoulder surface adjacent to the shaft raceway surface at a position on the first end part side with respect to the shaft raceway surface; and
a fitting portion adjacent to the groove shoulder surface forming portion at a position on the first end part side with respect to the groove shoulder surface forming portion, and
a size of the groove shoulder surface forming portion in a radial direction of the sun gear shaft is larger than a size of the fitting portion in the radial direction of the sun gear shaft.

4. The sun gear unit according to claim 1, wherein the sun gear shaft has a first groove shoulder surface and a second groove shoulder surface adjacent to the shaft raceway surface to sandwich the shaft raceway surface in an axial direction of the sun gear shaft,
the first groove shoulder surface and the second groove shoulder surface each have an annular shape extending in a circumferential direction of the sun gear shaft, and
an outer diameter of the first groove shoulder surface and an outer diameter of the second groove shoulder surface are different from each other.

5. The sun gear unit according to claim 1, wherein an engagement portion that engages with the support portion in an axial direction of the sun gear shaft is provided on an outer circumferential surface of the outer ring.

6. The sun gear unit according to claim 1, wherein a gap is provided between the sun gear and the outer ring and rolling elements in an axial direction of the sun gear shaft.

7. The sun gear unit according to any one of claims 1 to 6, wherein the sun gear shaft is provided with a shaft through hole extending along an axis of the sun gear shaft and through which a rotating shaft is passed.

8. The sun gear unit according to claim 7, wherein a hardened layer is provided on a surface portion of the sun gear shaft,
the portion provided with the hardened layer has a higher hardness than a portion of the sun gear shaft other than the hardened layer, and
a thickness of the hardened layer is greater than half of a wall thickness at the shaft raceway surface of the sun gear shaft.

9. A transmission comprising: the planetary gear mechanism having the sun gear unit according to claim 7; and
a differential gear unit having a differential case to which a rotational force is transmitted from the planetary gear mechanism, and a differential mechanism provided within the differential case, wherein
a drive shaft connected to the differential mechanism is passed through the shaft through hole as the rotating shaft.
